# FASCICULE DE BREVET EUROPEEN

(11) **EP 2 812 125 B1**
(45) Date de publication et mention de la délivrance du brevet: **16.11.2016**
(21) Numéro de dépôt: 13703079.7
(22) Date de dépôt: 08.02.2013
(51) Int. Cl.: B05D 1/20

(54) **PROCEDE DE DEPOT D'UN FILM DE PARTICULES SUR UN SUBSTRAT VIA UN CONVOYEUR LIQUIDE, COMPRENANT UNE ETAPE DE STRUCTURATION DU FILM SUR LE SUBSTRAT**
VERFAHREN ZUR ABLAGERUNG EINES PARTIKELFILMS AUF EINEM SUBSTRAT MITTELS EINES FLÜSSIGKEITSFÖRDERERS EINSCHLIESSLICH EINES SCHRITTES ZUR STRUKTURIERUNG DES FILMS AUF DEM SUBSTRAT
METHOD FOR DEPOSITING A PARTICLE FILM ONTO A SUBSTRATE VIA A LIQUID CONVEYOR, INCLUDING A STEP OF STRUCTURING THE FILM ON THE SUBSTRATE

(30) Priorité: 10.02.2012 FR 1251256
(43) Date de publication de la demande: 17.12.2014
(73) Titulaire: Commissariat à l'Énergie Atomique et aux Énergies Alternatives, 75015 Paris (FR)
(72) Inventeur: DELLEA, Olivier, F-42350 La Talaudiere (FR); CORONEL, Philippe, F-38530 Barraux (FR); DESAGE, Simon, Frédéric, F-42400 Saint-chamond (FR); FUGIER, Pascal, F-38190 Bernin (FR)
(74) Mandataire: Brevalex
(86) Numéro de dépôt international: PCT/EP2013/052511
(87) Numéro de publication internationale: WO 2013/117680

(56) Documents cités:
- WO-A1-99/38623
- WO-A1-03/095108
- WO-A2-01/89716
- CN-A- 1 544 308
- US-A1- 2005 281 944
- SACHIN KINGE ET AL: "Self-Assembling Nanoparticles at Surfaces and Interfaces", CHEMPHYSCHEM, vol. 9, no. 1, 11 janvier 2008 (2008-01-11), pages 20-42, XP055042089, ISSN: 1439-4235, DOI: 10.1002/cphc.200700475 cité dans la demande

## Description

### DOMAINE TECHNIQUE

L'invention se rapporte au domaine des procédés pour le dépôt de particules sur un substrat, de préférence en défilement.

Plus précisément, elle concerne le dépôt d'un film de particules ordonnées, de préférence du type monocouche, dont la taille des particules peut être comprise entre quelques nanomètres et plusieurs centaines de micromètres. Les particules, de préférence de forme sphérique, peuvent par exemple être des particules de silice.

L'invention se rapporte essentiellement à une étape de structuration du film de particules après son dépôt sur le substrat, cette structuration visant par exemple à y intégrer d'autres particules, et/ou des objets. Une autre possibilité consiste à conserver des zones évidées de particules, entourées par le reste du film ordonné déposé sur le substrat.

Dans le cas de l'intégration d'objets dans le film déposé, il s'agit en particulier de fabriquer des dispositifs à caractère hybride, comme par exemple des capteurs. A titre indicatif, un dispositif hybride associe par définition sur un même substrat des objets ayant diverses fonctions, par exemple électroniques, optiques, électro-optiques, piézo-électriques, thermoélectriques, mécaniques, etc.

Les objets susceptibles d'être intégrés au film de particules sont par exemple :
- des composants électroniques actifs, tels que des transistors, microprocesseurs, circuits intégrés, etc. ;
- des composants passifs de l'électronique, comme des résistances, capacités, diodes, photodiodes, bobines, pistes conductrices, préformes de soudure, etc. ;
- des composants optiques, tels que des lentilles, microlentilles, réseaux de diffraction, filtres, etc. ;
- des piles, micro-piles, micro-batteries, photo-détecteurs, cellules solaires, système RFID, etc. ;
- des particules ou agrégats nano ou micrométriques, actifs ou passifs, par exemple du type oxydes, polymères, métaux, semi-conducteurs, Janus (particules ayant deux faces de natures ou propriétés différentes), nanotubes, etc.

Plus particulièrement, l'invention concerne l'intégration d'objets dont les dimensions s'étendent :
- pour les composants : de l'échelle microscopique (quelques dizaines de microns), à l'échelle macroscopique (plus d'une dizaine de centimètres) ; et
- pour les particules et agrégats : du nanomètre à plusieurs centaines de microns.

Plus généralement, l'invention présente des applications dans le domaine des piles à combustible, de l'optique, de la photonique, du revêtement de polymère, des puces, des MEMs, de la structuration de surface pour l'électronique organique et le photovoltaïque, etc.

### ÉTAT DE LA TECHNIQUE ANTÉRIEURE

Pour le dépôt de films de particules ordonnées, il a récemment été développé une technique de transfert d'un film de particules ordonnées sur un substrat, via un convoyeur liquide. Néanmoins, les techniques usuelles de structuration ne s'avèrent pas adaptées lorsqu'il s'agit de transférer le film sur un substrat par l'intermédiaire d'un convoyeur liquide.

De plus, ces techniques usuelles restent généralement peu tolérantes aux erreurs de manipulation.

### EXPOSÉ DE L'INVENTION

L'invention a donc pour but de remédier au moins partiellement aux inconvénients mentionnés ci-dessus. Pour ce faire, l'invention a pour objet un procédé de dépôt de particules sur un substrat, de préférence en défilement, comprenant les étapes suivantes :
(a) réalisation d'un film compact de particules flottant sur un liquide porteur prévu dans une zone de transfert présentant une sortie de particules agencée en regard dudit substrat ;
(b) dépôt d'une substance sur ledit film compact de particules, dans la zone de transfert ;
(c) transfert, par ladite sortie de particules et sur ledit substrat, du film compact de particules revêtu de la substance ; puis
(d) retrait de la substance de manière à emporter avec elle les particules du film qui y adhèrent, afin de créer au moins une zone évidée au sein de ce film déposé sur le substrat.

L'invention apporte ainsi une solution simple et efficace permettant de structurer un film de particules ordonnées après son dépôt sur le substrat, tout en utilisant un convoyeur liquide rendant ce procédé tolérant aux éventuelles erreurs de manipulation et/ou de dépôt de la substance. En effet, en cas d'erreur, celle-ci peut être facilement corrigée lorsque les particules sont encore sur le liquide porteur, avant leur dépôt sur le substrat.

Plus généralement, l'invention offre une grande souplesse de réalisation.

L'étape de structuration du film vise par exemple à y intégrer des particules différentes, et/ou des objets, ou tout simplement à laisser vides les zones évidées de particules de particules.

A cet égard, il est indiqué que la substance est déposée de manière à définir au moins un motif, par exemple un point ou un cordon, fermé ou non. En fonction de son diamètre, le cordon peut même être assimilé à un trait. Il peut alternativement s'agir de motifs surfaciques, par exemple en forme de disque, quadrilatère, ou toute autre forme réputée appropriée pour définir ensuite la zone évidée souhaitée.

Bien entendu, des motifs différents peuvent se succéder sur le film de particules, sans sortir du cadre de l'invention.

Parmi les objets envisagés pour être placés dans les zones évidées, il est cité des puces en silicium, des micro-batteries, des composants de l'électronique organique, des éléments métalliques, des cellules photovoltaïques, des piles et micro-piles. Ces objets permettent notamment de fabriquer des dispositifs à caractère hybride, comme par exemple des capteurs.

Par ailleurs, lorsqu'il s'agit de remplir la zone évidée à l'aide d'autres particules, celles-ci sont de préférence différentes de celles du film préalablement réalisé sur le liquide porteur, par exemple avec une composition et/ou une taille distinctes. Cela permet notamment de former un film avec des gradients.

De préférence, ladite substance comprend un composé polymérisable, qui est polymérisé après son dépôt sur le film compact de particules.

L'utilisation d'une telle substance polymérisable se révèle tout à fait adaptée au contexte de transfert de particules par convoyeur liquide. En particulier, lors de son application, toute substance polymérisable est capable de s'adapter aux différences de niveaux entre les particules du film.

Cette substance, une fois polymérisée, forme ainsi un ou plusieurs motifs solides qui sont ensuite destinés à être retirés, avec les particules qui y adhèrent.

D'autres types de substances assurant des fonctions analogues peuvent être retenus, sans sortir du cadre de l'invention.

Dans le cas préféré d'une substance contenant un composé polymérisable, la polymérisation s'effectue par toute technique réputée appropriée par l'homme du métier, de préférence thermique ou optique. Elle est complète ou partielle avant l'étape (c), ou bien initiée après cette étape. Dans tous les cas, il est préférentiellement fait en sorte qu'après la polymérisation, sensiblement toutes les particules au contact de la substance adhèrent suffisamment à celle-ci pour que lors du retrait de cette substance, elle emporte avec elle ces mêmes particules, en les arrachant au substrat. Seules certaines particules situées à la périphérie des motifs peuvent éventuellement rester collées sur le substrat, sans sortir du cadre de l'invention.

Le retrait de la substance polymérisée s'effectue de préférence par pelage, de manière manuelle avec des outils appropriés, ou bien de façon automatisée.

De préférence, au moment du transfert sur le substrat, la substance qui adhère aux particules à son contact, qu'elle soit ou non polymérisée, reste suffisamment souple de manière à supporter une éventuelle flexion lors du passage de la zone de transfert au substrat.

En fonction des besoins rencontrés, le diamètre des cordons / points obtenus peut être entre quelques dizaines de microns et plusieurs millimètres.

De préférence, ladite substance se présente sous la forme d'un liquide ou d'une pâte.

De préférence, ladite substance présente un caractère hydrophobe, et de préférence aussi à l'état solide polymérisé.

De manière plus générale, tenant notamment compte des cas où le liquide porteur n'est pas de l'eau, il est noté que la substance se révèle non-miscible avec le liquide porteur.

De préférence, ladite substance est à base de résine silicone, de résine époxy, et/ou de résine polyuréthane.

De préférence, le rapport entre la grande dimension des particules du film compact, et celle des objets logés ultérieurement dans les zones évidées du film déposé sur le substrat, est compris entre 10⁴ et 10⁸. A titre d'exemple, les particules formant le film compact peuvent présenter une grande dimension de l'ordre de 1 nm à 500 µm, tandis que les objets peuvent quant à eux présenter une grande dimension allant jusqu'à environ 30 cm.

De préférence, les particules du film compact sont des billes de silice d'environ 1 µm de diamètre. Il est néanmoins noté que le film peut être hétérogène, à savoir comporter des billes de tailles différentes.

De préférence, chaque objet présente une grande dimension supérieure à 0,2 cm, et de préférence inférieure à 30 cm. Cette dernière valeur peut être adaptée en fonction de la largeur du film déposé. En effet, la grande dimension de chaque objet peut atteindre une valeur proche de la largeur finale de ce film. Des objets de taille micrométrique ou nanométrique peuvent également être utilisés, sans sortir du cadre de l'invention.

L'objet intégré ultérieurement au film, dont certains exemples ont été cités précédemment, peut être de toute forme, non-nécessairement plane, éventuellement présentant un ou plusieurs rayons de courbure, par exemple inférieur à 5 cm, ou encore intégrant des plots utiles pour la connectique. De même, pour les particules du film, les formes peuvent être variées, mais sont de préférence homogènes.

Par le biais de l'invention, il est également visé la fabrication de dispositifs complexes comme par exemple des capteurs comprenant des éléments de détections (des particules par exemple), un ou plusieurs systèmes de récupération d'énergie (cellule photovoltaïque, film piézo-électrique, pile à combustible), un système de stockage de l'énergie (micro-batterie), un système de gestion de l'information (puce en Silicium), un système de communication (puce RFID), des éléments de liaison électrique (pistes conductrices), des composants électroniques (résistances, condensateurs), des éléments de soudure (préformes). Les objets nécessaires à l'obtention de ces dispositifs sont alors agencés en conséquence sur le film déposé, en lieu et place de la substance retirée, ces objets étant au besoin superposés.

Il est par ailleurs noté que le film compact de particules, dont le concept est par exemple divulgué dans le document Sachin Kinge, "Self-Assembling Nanoparticles at Surfaces and Interfaces", ChemPhysChem 2008, 9, 20-42, peut être obtenu à la surface du liquide porteur par toute technique connue de l'homme du métier, par exemple par compression, et/ou interaction dipôle-dipôle, et/ou par champ magnétique, etc.

La technique par interaction dipôle-dipôle s'applique pour les particules à facettes, par exemple tétraédriques, cubiques ou encore octaédriques. Avec ces formes, les interactions dipôle-dipôle jouent un rôle important dans l'organisation des particules. Les moments dipolaires sont générés à l'intérieur de ces particules, à cause des différences de polarité entre les facettes.

La technique d'organisation par champ magnétique est employée avec des nanoparticules magnétiques pouvant être ordonnées en utilisant un champ magnétique intense, générant des interactions fortes entre les particules.

La technique par compression est notamment connue du document Lucio Isa et al., "Particle Lithography from Colloidal Self-Assembly at Liquid_Liquid Interfaces", acsnano, VOL. 4 ▪ NO. 10 ▪ 5665-5670 ▪ 2010, du document Markus Retsch, « Fabrication of Large-Area, Transferable Colloidal Monolayers Utilizing Self-Assembly at the Air/Water Interface", Macromol. Chem. Phys. 2009, 210, 230-241, ou encore du document Maria Bardosova, « The Langmuir-Blodgett Approach to Making Colloidal Photonic Crystals from Silica Spheres", Adv. Mater. 2010, 22, 3104-3124.

Cette technique par compression comprend également la solution à rampe inclinée décrite dans le document CA 2 695 449. Ainsi, le procédé selon l'invention met préférentiellement en oeuvre une rampe inclinée de circulation des particules, rattachée à une entrée de la zone de transfert, et sur laquelle ledit liquide porteur est également destiné à circuler.

Une partie de l'énergie nécessaire à l'ordonnancement des particules en régime normal est alors ici amenée par la rampe inclinée transportant le liquide porteur et les particules. D'autres solutions sont néanmoins possibles, comme la mise en mouvement, à l'aide d'une pompe, du liquide porteur sur un plan horizontal dont la partie aval constitue la zone de transfert des particules. Une autre solution consiste à remplacer la pompe par une soufflerie permettant d'appliquer un flux d'air à la surface du liquide porteur, sur lequel flottent les particules à transférer. Comme mentionné ci-dessus, d'autres solutions sont néanmoins envisageables, sans sortir du cadre de l'invention, comme un travail de compression des particules via une technique dite « Langmuir-Blodgett ».

Enfin, postérieurement au transfert sur le substrat, le procédé intègre de préférence une étape de recuit thermique pour faciliter le dépôt et l'adhérence de ces particules sur le substrat.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 montre une installation de dépôt selon un mode de réalisation préféré de la présente invention, en coupe schématique prise le long de la ligne I-I de la figure 2 ;
- la figure 2 représente une vue schématique de dessus de l'installation de dépôt montrée sur la figure 1 ; et
- les figures 3 à 9 représentent différentes étapes d'un procédé de dépôt mis en oeuvre à l'aide de l'installation montrée sur les figures précédentes, selon un mode de réalisation préféré.

### EXPOSÉ DÉTAILLÉ DE MODES DE RÉALISATION PRÉFÉRÉS

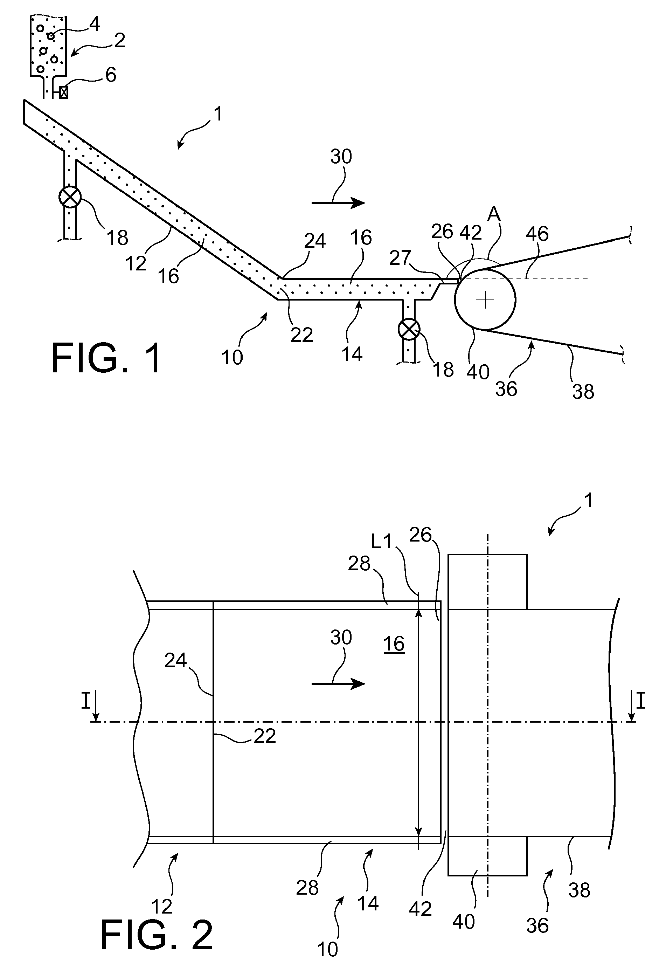

En référence tout d'abord aux figures 1 et 2, on peut apercevoir une installation 1 pour le transfert de particules sur un substrat, de préférence en défilement. Ce transfert, assimilable à un dépôt, s'effectue en formant un film compact de particules sur un liquide porteur, film qui est ensuite déposé sur le substrat avant d'être structuré en fonction des besoins rencontrés, comme cela sera détaillé ci-après.

L'installation 1 comporte un dispositif 2 de dispense de particules 4, dont la taille peut être comprise entre quelques nanomètres et plusieurs centaines de micromètres. Les particules, de préférence de forme sphérique, peuvent par exemple être des particules de silice. D'autres particules d'intérêt peuvent être faites de métal ou d'oxyde de métal comme le Platine, le TiO2, de polymère comme le polystyrène ou le PMMA, de carbone, etc.

Plus précisément, dans le mode de réalisation préféré, les particules sont des sphères de silice d'environ 1 µm de diamètre, stockées en solution dans le dispositif de dispense 2. La proportion du milieu est d'environ 7 g de particules pour 200 ml de solution, ici du butanol. Naturellement, pour des raisons de clarté, les particules représentées sur les figures adoptent un diamètre supérieur à leur diamètre réel.

Le dispositif de dispense 2 présente une buse d'injection 6 commandable, d'environ 500 µm de diamètre.

L'installation comporte également un convoyeur liquide 10, intégrant une rampe inclinée 12 de circulation des particules, et une zone de transfert 14 sensiblement horizontale, voire présentant une légère inclinaison de façon à favoriser la vidange de l'installation, le cas échéant. L'extrémité haute de la rampe inclinée est prévue pour recevoir les particules injectées depuis le dispositif de dispense 2. Cette rampe est droite, inclinée d'un angle compris entre 5 et 60°, de préférence entre 10 et 30°, permettant aux particules d'être acheminées vers la zone de transfert 14. De plus, un liquide porteur 16 circule sur cette rampe 12, jusque dans la zone de transfert. Ce liquide 16 peut d'ailleurs être re-circulé à l'aide d'une ou deux pompes 18, entre la zone de transfert 14 et l'extrémité haute de la rampe. Il s'agit ici de préférence d'une eau dé-ionisée, sur laquelle les particules 4 peuvent flotter. Néanmoins, on peut privilégier un liquide neuf via un circuit de circulation ouvert. Il peut aussi s'agir d'une association de plusieurs liquides non-miscibles.

L'extrémité basse de cette même rampe est raccordée à une entrée de la zone de transfert de particules 14. Cette entrée 22 se situe au niveau d'une ligne d'inflexion 24 matérialisant la jonction entre la surface du liquide porteur présent sur le plan incliné de la rampe 12, et la surface du liquide porteur présent sur la partie horizontale de la zone de transfert 14.

L'entrée de particules 22 est espacée d'une sortie de particules 26 à l'aide de deux rebords latéraux 28 retenant le liquide porteur 16 dans la zone 14. Ces rebords 28, en regard et à distance l'un de l'autre, s'étendent parallèlement à une direction principale d'écoulement du liquide porteur et des particules dans l'installation, cette direction étant schématisée par la flèche 30 sur les figures 1 et 2. La zone 14 prend par conséquent la forme d'un couloir ou d'un chemin ouvert à son entrée et à sa sortie, même si d'autres géométries pourraient être adoptées, sans sortir du cadre de l'invention.

Le fond de la partie aval de la zone de transfert présente un plateau 27 légèrement incliné vers l'amont par rapport à la direction horizontale, par exemple d'une valeur de l'ordre de 5 à 10°. C'est l'extrémité aval de ce même plateau 27, également dénommé « blade », qui définit en partie la sortie des particules 26.

L'installation 1 est également pourvue d'un convoyeur de substrat 36, destiné à mettre le substrat 38 en défilement. Ce substrat peut être rigide ou souple. Dans ce dernier cas, il peut être mis en mouvement sur un rouleau 40 dont l'axe est parallèle à la sortie 26 de la zone 14, à proximité de laquelle il se situe. En effet, le substrat 38 est destiné à défiler de manière très rapprochée de la sortie 26, afin que les particules atteignant cette sortie puisse être transférées aisément sur ce substrat, via un pont capillaire 42, également dénommé ménisque, qui le relie au liquide porteur 16. Alternativement, le substrat peut être au contact directement de la zone de transfert, sans sortir du cadre de l'invention. Le pont capillaire mentionné ci-dessus n'est alors plus requis.

Dans l'exemple montré sur les figures, la largeur du substrat correspond à la largeur de la zone 14 et de sa sortie 26. Il s'agit d'une largeur L1 qui correspond aussi à la largeur maximale du film de particules qu'il est possible de déposer sur le substrat. Cette largeur peut être de l'ordre de 25 à 30 cm. La largeur du substrat sur lequel doivent être déposées les particules peut cependant être inférieure à la largeur L1.

Le pont capillaire 42 est assuré entre le liquide porteur 16 qui se situe au niveau de la sortie 26, et une partie du substrat 38 épousant le rouleau de guidage / d'entraînement 40.

De préférence, l'angle saillant A, formé entre la direction horizontale 46 et la partie du substrat 38 sur laquelle le film de particules et les objets doivent se déposer, est supérieure à 160°, et encore plus préférentiellement proche de 180°, par exemple de l'ordre de 175°.

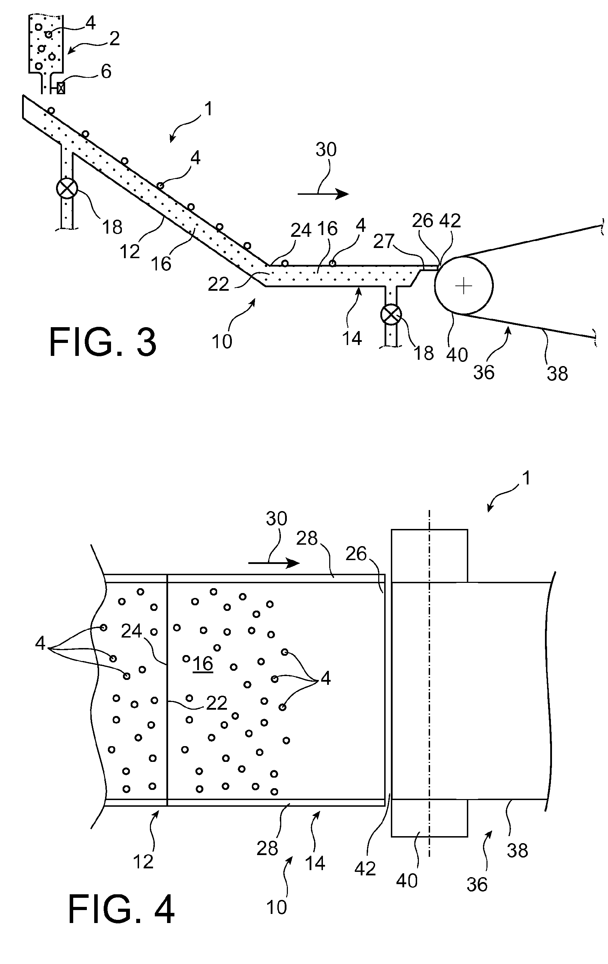

Un procédé de dépôt de particules selon un mode de réalisation va maintenant être décrit en référence aux figures 3 à 9.

Tout d'abord, la buse d'injection 6 est activée pour débuter la dispense des particules 4 sur la rampe 12. Il s'agit de mettre en oeuvre une étape initiale de remplissage de la zone de transfert 14, par les particules 4, avec le liquide porteur 16 déjà au niveau requis dans la zone 14.

Durant cette phase d'amorçage, les particules dispensées par le dispositif 2 circulent sur la rampe 12, puis pénètrent dans la zone 14 dans laquelle elles se dispersent, comme cela a été schématisé sur les figures 3 et 4.

Au fur et à mesure que les particules 4 sont injectées sur la rampe 12 et pénètrent dans la zone de transfert 14, elles viennent en butée contre le substrat 38, puis le front amont de ces particules a tendance à se décaler vers l'amont, en direction de la ligne d'inflexion 24. L'injection de particules est poursuivie même après que ce front amont ait dépassé la ligne 24, afin qu'il remonte sur la rampe inclinée 12.

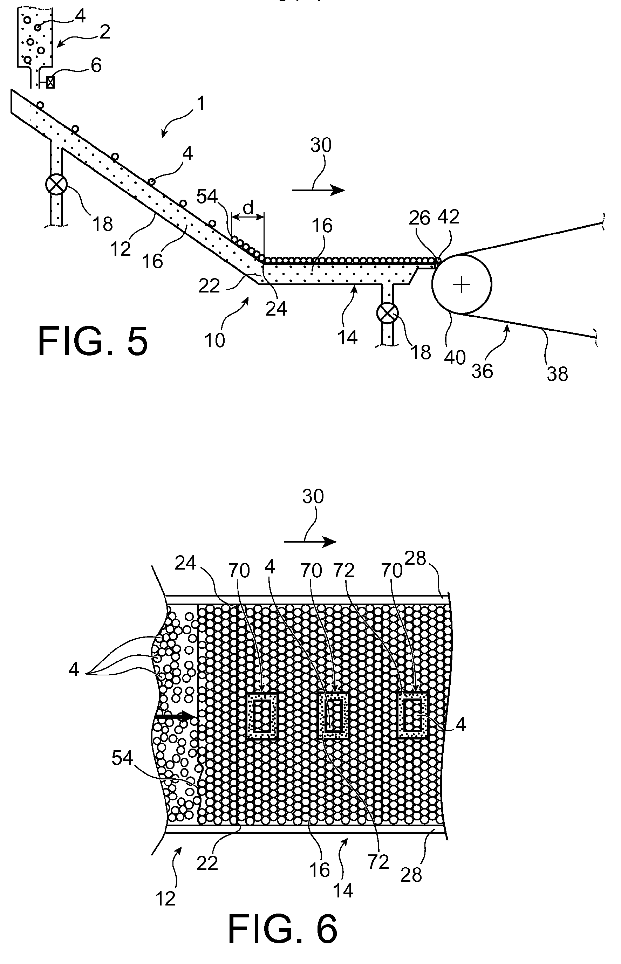

Effectivement, il est fait en sorte que le front amont de particules 54 remonte sur la rampe 12 de manière à ce qu'il se situe à une distance horizontale « d » donnée de la ligne d'inflexion 24, comme montré sur la figure 5. La distance « d » peut être de l'ordre de 30 mm.

A cet instant, les particules 4 sont ordonnées dans la zone de transfert et sur la rampe 12, sur laquelle elles s'ordonnent automatiquement, sans assistance, grâce notamment à leur énergie cinétique et aux forces capillaires mises à profit au moment de l'impact sur le front 54. L'ordonnancement est tel que le film compact obtenu présente une structure dite « hexagonale compacte », dans laquelle chaque particule 4 est entourée et contactée par six autres particules 4 en contact entre elles. Il est alors indifféremment parlé de film compact de particules, ou de film de particules ordonnées.

Une fois que les particules ordonnancées 4 formant le film recouvrent l'intégralité du liquide porteur situé dans la zone de transfert 14, il est procédé à une étape de réalisation de motifs 70 sur le film 4, par dépôt d'une substance 72 sur les particules.

Ici, chaque motif 70 prend la forme d'un cordon suivante une ligne fermée, mais pourrait alternativement prendre toute autre forme réputée appropriée en fonction des besoins rencontrés, comme une forme de point ou une forme surfacique.

La figure 6 montre un exemple de plusieurs motifs 70 définis à l'aide de la substance 72 déposée, permettant de maintenir les unes par rapport aux autres les particules mouillées par cette substance 72, qui est ici de préférence du type comprenant un composé polymérisable. Bien entendu, les particules 4 situées intérieurement et extérieurement par rapport aux contours 72 en forme de cordons restent ordonnées.

Le dépôt de la substance polymérisable s'effectue par exemple à l'aide d'une buse de dispense (non représentée). A l'arrivée au contact des particules, la substance 72 est capable de s'adapter à la topographie du film ordonné, et adhère aux particules 4 qu'elle recouvre.

Le composé polymérisable est par exemple une résine silicone, une résine époxy, et/ou une résine polyuréthane. La polymérisation s'effectue de manière classique, par exemple par voie thermique et/ou optique, et s'opère de préférence, au moins en partie, lorsque la substance se trouve encore dans la zone de transfert, pas encore déposée sur le substrat.

La substance 72 se présente alors sous forme de liquide ou de pâte, à laquelle des particules peuvent éventuellement être ajoutées avant sa dispense.

Par ailleurs, il est indiqué que la substance est retenue de manière à ce qu'elle permette une certaine souplesse du cordon lors du transfert sur le substrat, afin de supporter la flexion lors du passage de la zone de transfert au substrat, et ce en raison de l'inclinaison A du substrat par rapport à la direction horizontale. Cette souplesse doit donc subsister après la polymérisation partielle ou totale du cordon dans la zone de transfert, avant le transfert sur le substrat.

De préférence, la substance 72 présente un caractère hydrophobe à l'état liquide, pour que celui-ci reste en surface du liquide porteur après sa dispense sur le film de particules 4, si la substance atteint cette même surface du liquide porteur. Quoi qu' il en soit, la substance 72, après son dépôt sur le film, adhère à ce dernier en raison de sa composition. Après la polymérisation, l'adhérence des particules à la substance est renforcée. De plus, la substance est également choisie de manière à rester insoluble dans le liquide porteur à l'état liquide, et également à l'état solide après polymérisation.

La polymérisation s'effectue donc préférentiellement avant le transfert sur le substrat, afin d'obtenir des cordons souples, de diamètre de préférence compris entre quelques dizaines de microns et plusieurs millimètres, maintenant ensemble les particules 4 qui sont à son contact et maintenant également la forme initiale des motifs.

L'étape suivante du processus consiste à déclencher le mouvement du substrat 38, initié dès que le front 54 a atteint le niveau requis représenté sur la figure 5, et après le dépôt de la substance 72. Le film de particules ordonnées 4, revêtu des motifs 70, se dépose alors sur le substrat 38 par déplacement à travers la sortie 26, en empruntant le pont capillaire 42, à la manière de celle décrite dans le document CA 2 695 449. En d'autres termes, le déplacement du film 4 permet de convoyer les motifs 70.

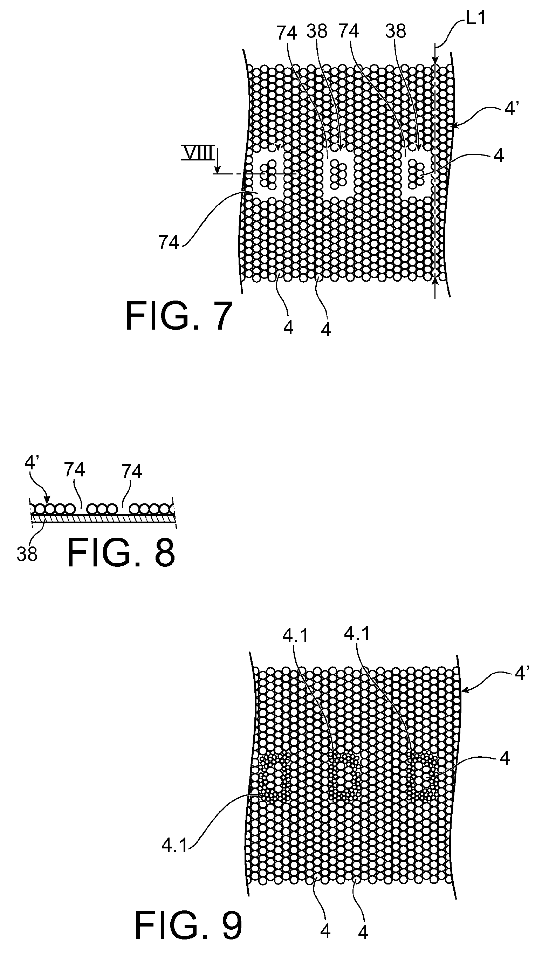

Comme évoqué ci-dessus, après le dépôt, la largeur du film structuré 4' montré sur la figure 7 correspond à la largeur L1 de la sortie 26, même si une largeur inférieure peut être adoptée, sans sortir du cadre de l'invention.

De façon encore plus préférée, le substrat est directement au contact de la sortie des particules.

Il est noté qu'avant le dépôt sur le substrat, les particules ordonnées 4 recouvrent toute la surface du liquide porteur 16 présent dans la zone de transfert. L'ordonnancement des particules est ainsi conservé jusqu'au moment du dépôt à la sortie 26 de la zone 14. La conservation de cet ordonnancement assure le maintien d'un positionnement relatif précis entre les motifs 72, ainsi qu'une position précise par rapport aux rebords latéraux fixes 28, jusqu'à ce que le film structuré 4' soit déposé sur le substrat.

Pour faciliter le dépôt et l'adhérence des particules 4 sur le substrat 38, de préférence réalisé en polymère, il est prévu un recuit thermique postérieurement au transfert. Ce recuit thermique est par exemple réalisé à 80°C, en utilisant un film mat de laminage basse température à base de polyester, par exemple commercialisé sous la référence PERFEX-MATT™, d'épaisseur 125µm.

L'avantage d'un tel film en tant que substrat est que l'une de ses faces devient collante à la température de l'ordre de 80°C, ce qui permet de faciliter l'adhérence des particules 4 sur celle-ci.

Plus précisément, à cette température, les particules 4 s'enfoncent dans le film ramolli 38, et permettent ainsi un contact direct des objets avec le film, qui conduit à leur collage.

Alternativement, le substrat 38 peut être du type silicium, verre, ou encore film piézoélectrique.

Au cours du transfert, l'injection de particules et la vitesse de défilement du substrat sont réglées de sorte que le front de particules reste dans une position sensiblement identique. Pour ce faire, le débit de particules peut être de l'ordre de 0,1 ml/min à plusieurs ml/min, tandis que la vitesse linéaire du substrat 38, également dénommée vitesse de tirage, peut être de l'ordre de quelques mm/min à plusieurs centaines de mm/min. Comme évoqué ci-dessus, l'alimentation en particules 4 peut être stoppée temporairement lors de la réalisation des motifs 70, ou bien maintenue.

L'étape suivante, schématisée sur les figures 7 et 8, consiste à retirer la substance 72 par pelage, de manière à emporter avec elle les particules 4 du film qui y adhèrent. Lors de ce retrait, l'enlèvement des particules concernées fait apparaître des zones évidées 74 au sein du film 4' déposé sur le substrat. Les zones évidées 74 adoptent alors une géométrie identique ou similaire à celle des motifs retirés 70, préalablement réalisés à l'aide de la substance 72.

Ensuite, si besoin, les zones évidées 74 sont remplies d'objets et/ou d'autres particules.

A cet égard, les objets peuvent être de différentes sortes, en fonction des applications désirées. Préférentiellement, chaque objet (non représenté) présente une grande dimension supérieure à 0,2 cm et inférieure ou égale à L1, c'est-à-dire proche 30 cm. L'épaisseur est comprise entre une dizaine de micromètres et plusieurs dizaines de millimètres.

Certains types d'objets comme les cellules solaires, micro-batteries et composants organiques ont une forme simple de carré, de rectangle, ou encore de disque, avec une faible épaisseur, et une superficie de l'ordre de 0,1 à 100 cm².

Ces composants peuvent comporter des plots ou pinoches sur la face en contact avec le liquide pour procéder à leur connectique. D'autres types objets, visant par exemple la détection d'éléments, la génération d'énergie ou encore le transport de l'information, peuvent avoir des formes complexes, par exemple des parties courbés ou en spirale.

Par ailleurs, le rapport entre la grande dimension des particules 4 et celle des objets logés dans les zones évidées du film 4' est préférentiellement compris entre 10⁴ et 10⁸. En effet, la grande dimension des particules est par exemple de l'ordre de 1 nm à 500 µm, tandis que les objets peuvent présenter une grande dimension allant jusqu'à environ 30 cm.

Le tableau ci-dessous recense quelques exemples préférés pour ces objets.

| **Nature** | **Dimensions** | **Domaine d'application** |
|---|---|---|
| Polyéthylène téréphtalate (PET) avec couche d'or structurée en surface | PET : 3x4cm² ; épaisseur 250µm ; | Electronique organique |
| | PET : 1,5x0,9cm² ; épaisseur 250µm, Au : épaisseur 30nm | |
| Verre avec cellule photovoltaïque en surface | 25x25mm² ; épaisseur 1,08mm | Cellule Photovoltaïque |
| Puce en silicium | 3x3cm² ; épaisseur 500µm | Electronique |
| | 1x1cm² ; épaisseur 500µm | |
| Micro-batterie sur silicium | 1x1cm² ; épaisseur 500µm | Stockage énergie |
| Matériau métallique bilame (ex. : zinc/cuivre) | 3,5x2cm² ; épaisseur 140µm | Thermique, capteurs |
| | 5x1,6cm² ; épaisseur 200µm | |
| | 7x1,6cm² ; épaisseur 200µm | |

Alternativement, les zones évidées 74 sont remplies d'autres particules 4.1, schématisées sur la figure 9, analogues aux particules 4 mais de composition et/ou de taille différentes, de préférence injectées de manière à être à leur tour ordonnées dans les zones intérieures remplies. Ces injections peuvent être réalisées selon toute forme réputée appropriée par l'homme du métier, par exemple par microspray, par buse, par jet d'encre, ou encore par convoyeur.

La solution à convoyeur, par exemple du type ruban ou succession de rouleaux, est aussi préférentiellement retenue dans le cas de l'intégration d'objets dans les zones évidées, par exemple pour former des dispositifs hybrides. Outre la solution de convoyeur, la mise en place de ces objets peut être réalisée à l'aide d'outils de manipulation ou de préhension conventionnels adaptés à la nature, la forme et la dimension des objets, comme des pinces.

Ici encore, il est noté que la mise en position des objets / des autres particules 4.1 s'effectue préférentiellement en arrêtant le défilement du substrat ainsi que le flux de particules provenant de la rampe 12, bien qu'il puisse en être autrement, sans sortir du cadre de l'invention.

Des applications possibles pour le procédé qui vient d'être décrit ont été mentionnées ci-dessus. Des exemples concrets sont également décrits ci-dessous.

Il peut s'agir de la fabrication de cellules photovoltaïques et de composants de type LED/PLED/OLED. Des études récentes ont montré que la structuration des interfaces dans le domaine des composants photovoltaïques, LED, PLED, OLED pouvait apporter au gain significatif en rendement ou en lumière émise. Dans ce cadre, les films compacts de particules sont par exemple utilisés comme éléments de masquage lors des étapes de structuration des interfaces. Les structurations sont opérées généralement au travers des interstices présents entre les particules par des dépôts de matériaux ou par gravure par plasma. Néanmoins certaines zones du substrat doivent être évidées pour, par exemple, laisser libre les zones de contacts électriques ou simplement parce qu'elles n'ont pas de fonction particulière. Par le procédé décrit ci-dessus, il est donc possible de définir avec la substance, sur le liquide, les zones devant être ensuite être évidées de particules, puis d'ôter cette substance après le dépôt du film sur le substrat.

Un autre exemple concerne les échangeurs thermiques. La structuration des parois des échangeurs est un moyen pour régler les échanges thermiques. Ces structurations sont réalisables par lithographie avec un masque de particules. Avec le procédé décrits ci-dessus, la mise en oeuvre de dépôts hétérogènes associant des particules de différentes dimensions rend possible l'obtention de géométries habituellement réalisées par lithographie, et notamment à des géométries avec des gradients de tailles de particules.

Encore un autre exemple se rapporte aux capteurs chimiques. Le procédé décrit ci-dessus offre la possibilité d'associer des films compacts hétérogènes avec des particules de différentes natures, et permettent donc la détection de différentes natures de gaz, espèces chimiques, etc.

Enfin, en tribologie, pour les applications mécaniques, des films compacts peuvent être utilisés comme masque de lithographie pour créer des micro/nanocuves permettant la rétention du lubrifiant à la surface des objets en frottement. L'ajustement des dimensions de ces micro/nanocuves de rétention est un paramètre de réglage du coefficient de frottement. Un moyen simple pour changer les dimensions de ces micro/nanocuves est d'utiliser comme masque de gravure un film compact hétérogène composé de différentes tailles de particules, facile à obtenir avec le procédé spécifique à la présente invention.

Bien entendu, diverses modifications peuvent être apportées par l'homme du métier à l'invention qui vient d'être décrite, uniquement à titre d'exemples non limitatifs.

## Revendications

1. Procédé de dépôt de particules sur un substrat (38), de préférence en défilement, comprenant les étapes suivantes :
(a) réalisation d'un film compact de particules (4) flottant sur un liquide porteur (16) prévu dans une zone de transfert (14) présentant une sortie de particules (26) agencée en regard dudit substrat (38) ;
(b) dépôt d'une substance (72) sur ledit film compact de particules (4), dans la zone de transfert (14) ;
(c) transfert, par ladite sortie de particules (26) et sur ledit substrat (38), du film compact de particules (4) revêtu de la substance (72) ; puis
(d) retrait de la substance (72) de manière à emporter avec elle les particules (4) du film qui y adhèrent, afin de créer au moins une zone évidée (74) au sein de ce film (4') déposé sur le substrat.

2. Procédé selon la revendication 1, **caractérisé en ce que** la substance (72) est déposée de manière à définir au moins un motif (70), par exemple un point ou un cordon.

3. Procédé selon la revendication 1 ou la revendication 2, dans lequel il est ensuite placé, dans chaque zone évidée (74), au moins un objet ou d'autres particules (4.1).

4. Procédé selon la revendication 3, dans lequel ledit objet est pris parmi le groupe des puces en silicium, des micro-batteries, des composants de l'électronique organique, des éléments métalliques, des cellules photovoltaïques, des piles et micro-piles.

5. Procédé selon l'une quelconque des revendications précédentes, dans lequel ladite substance (72) comprend un composé polymérisable, qui est polymérisé après son dépôt sur le film compact de particules (4).

6. Procédé selon l'une quelconque des revendications précédentes, dans lequel ladite substance (72) se présente sous la forme d'un liquide ou d'une pâte.

7. Procédé selon l'une quelconque des revendications précédentes, dans lequel ladite substance (72) présente un caractère hydrophobe.

8. Procédé selon l'une quelconque des revendications précédentes, dans lequel ladite substance (72) est à base de résine silicone, de résine époxy, et/ou de résine polyuréthane.

9. Procédé selon l'une quelconque des revendications précédentes, **caractérisé en ce qu'**il met en oeuvre une rampe inclinée (12) de circulation des particules, rattachée à ladite entrée de la zone de transfert, et sur laquelle ledit liquide porteur (16) est également destiné à circuler.

## Patentansprüche

1. Verfahren zum Aufbringen von Partikeln auf ein vorzugsweise vorbeilaufendes Substrat (38), umfassend die nachfolgenden Schritte:
(a) Herstellen eines kompakten Films aus Partikeln (4), die auf einer Trägerflüssigkeit (16) schwimmen, die in einem Übertragungsbereich (14) vorgesehen ist, der einen Partikelauslass (26) aufweist, der dem Substrat (38) gegenüberliegend angeordnet ist;
(b) Aufbringen einer Substanz (72) auf den kompakten Partikelfilm (4) in dem Übertragungsbereich (14);
(c) Übertragen des mit der Substanz (82) überzogenen kompakten Partikelfilms (4) über den Partikelauslass (26) auf das Substrat (38);
(d) Entfernen der Substanz (72) derart, dass mit dieser die Partikel (4) des Films, auf dem sie haften, mitgenommen werden, um zumindest einen ausgenommenen Bereich (74) innerhalb dieses Films (4'), der auf das Substrat aufgebracht ist, zu schaffen.

2. Verfahren nach Anspruch 1, **dadurch gekennzeichnet, dass** die Substanz (72) so aufgebracht wird, dass sie zumindest ein Muster (70), beispielweise einen Punkt oder einen Strich, definiert.

3. Verfahren nach Anspruch 1 oder Anspruch 2, wobei dann in jedem ausgenommenen Bereich (74) zumindest ein Objekt oder weitere Partikel (4.1) positioniert werden.

4. Verfahren nach Anspruch 3, wobei das Objekt aus der Gruppe umfassend Silicium-Chips, Mikroakkus, Bauteile der organischen Elektronik, metallische Elemente, Solarzellen, Batterien und Mikro-Batterien ausgewählt ist.

5. Verfahren nach einem der vorangehenden Ansprüche, wobei die Substanz (72) eine polymerisierbare Verbindung enthält, die nach deren Aufbringen auf den kompakten Partikelfilm (4) polymerisiert wird.

6. Verfahren nach einem der vorangehenden Ansprüche, wobei die Substanz (72) in Form einer Flüssigkeit oder einer Paste vorliegt.

7. Verfahren nach einem der vorangehenden Ansprüche, wobei die Substanz (72) eine hydrophobe Eigenschaft hat.

8. Verfahren nach einem der vorangehenden Ansprüche, wobei die Substanz (72) auf Basis von Silikonharz, Epoxidharz und/oder Polyurethanharz besteht.

9. Verfahren nach einem der vorangehenden Ansprüche, **dadurch gekennzeichnet, dass** es eine geneigte Rampe (12) zur Zirkulation von Partikeln verwendet, die mit dem Einlass des Übertragungsbereichs verbunden ist und auf welcher auch die Trägerflüssigkeit (16) zirkulieren soll.

## Claims

1. A method for depositing particles onto a substrate (38), preferably a running substrate, comprising the following steps:
(a) making a compact film of particles (4) floating on a carrier liquid (16) provided in a transfer area (14) having an outlet of particles (26) laid out facing said substrate (38);
(b) depositing a substance (72) onto said compact film of particles (4), in the transfer area (14);
(c) transferring, through said outlet of particles (26) and onto said substrate (38), the compact film of particles (4) coated with the substance (72); and then
(d) removing the substance (72) so as to have it carry away the particles (4) of the film which adhere to it, in order to generate at least one recessed area (74) within this film (4') deposited on the substrate.

2. The method according to claim 1, **characterized in that** the substance (72) is deposited so as to define at least one pattern (70), for example a point or a cord.

3. The method according to claim 1 or claim 2, wherein in each recessed area (74), at least one object or other particles (4.1) are placed subsequently.

4. The method according to claim 3, wherein each object is taken from the group of silicon chips, micro-batteries, components of organic electronics, metal elements, photovoltaic cells, battery cells and micro-battery cells.

5. The method according to any of the preceding claims, wherein said substance (72) comprises a polymerizable compound, which is polymerized after its deposition on the compact film of particles (4).

6. The method according to any of the preceding claims, wherein said substance (72) appears as a liquid or a slurry.

7. The method according to any of the preceding claims, wherein said substance (72) has hydrophobicity.

8. The method according to any of the preceding claims, wherein said substance (72) is based on a silicone resin, epoxy resin and/or polyurethane resin.

9. The method according to any of the preceding claims, **characterized in that** it applies a tilted ramp (12) for circulation of particles, attached to said inlet of the transfer area, and on which are said the carrier liquid (16) is also intended to circulate.
